(19) Europäisches Patentamt
European Patent Office
Office européen des brevets

(11) Numéro de publication: **0 172 115 B1**

(12) **FASCICULE DE BREVET EUROPEEN**

(45) Date de publication du fascicule du brevet: **26.10.88**

(51) Int. Cl.⁴: **C 08 L 67/02**, C 08 K 5/52 // (C08L67/02, 67:02)

(21) Numéro de dépôt: **85420119.1**

(22) Date de dépôt: **26.06.85**

(54) **Compositions à base de couples de polyesters thermoplastiques.**

(30) Priorité: **05.07.84 FR 8410904**

(43) Date de publication de la demande: **19.02.86 Bulletin 86/8**

(45) Mention de la délivrance du brevet: **26.10.88 Bulletin 88/43**

(84) Etats contractants désignés: **AT BE CH DE GB IT LI LU NL SE**

(56) Documents cités:
**DE - A - 2 749 261**
**FR - A - 2 223 424**
**FR - A - 2 243 978**

**K. THINUIS: "Stabiliserung und Alterung von Plastwerkstoffen", vol. 1, 1969, Akademie Verlag, Berlin, DE;**

(73) Titulaire: **RHONE-POULENC CHIMIE, 25, quai Paul Doumer, F-92408 Courbevoie Cédex (FR)**

(72) Inventeur: **Bonin, Yves, 4, rue du Général de Gaulle, F-69530 Brignais (FR)**
Inventeur: **Logeat, Michel, "Le Remoulon" Serpaize, F-38200 Vienne (FR)**

(74) Mandataire: **Trolliet, Maurice et al, RHONE-POULENC INTERSERVICES Service Brevets Chimie Centre de Recherches de Saint-Fons B.P. 62, F-69192 Saint-Fons Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet des compositions destinées notamment au moulage comprenant un couple de polyesters aliphatiques thermoplastiques. Plus particulièrement, l'invention concerne des compositions dans lesquelles les constituants polyesters ne subissent pas une réaction de transestérification à un degré appréciable lors d'un chauffage à la température de moulage.

Jusqu'à présent, le polytéréphtalate d'éthylèneglycol a été considéré comme étant le plus intéressant des polyesters thermoplastiques du point de vue industriel et commercial. Cependant le polytéréphtalate d'éthylèneglycol, bien qu'il soit facilement disponible et qu'il ait un prix intéressant, n'a été adopté que d'une façon limitée comme résine de moulage pour la fabrication d'articles conformés. Cette utilisation limitée peut être due principalement à la faible vitesse de cristallisation qui est inhérente à sa structure, à sa tendance à subir des retraits importants conduisant à des articles déformés et à sa tendance à former des articles qui sont susceptibles d'évoluer par suite d'une cristallisation lors d'un réchauffement. L'emploi de durées prolongées de séjour dans le moule pour obtenir la cristallisation voulue, ne présente pas d'intérêt industriel.

Certains polytéréphtalates d'alkylèneglycol, autres que le polytéréphtalate d'éthylèneglycol, comme le polytéréphtalate de butanediol-1,4, ont été utilisés avec succès comme résine de moulage en raison de leur aptitude propre à cristalliser plus rapidement que le polytéréphtalate d'éthylèneglycol, ce qui rend le moulage plus facile: le démoulage est très aisé et les durées des cycles sont courtes.

Toutefois, le polytéréphtalate de butanediol-1,4 a tendance à être plus cher que le polytéréphtalate d'éthylèneglycol ce qui a limité à un certain degré son développement. De plus, les articles moulés obtenus présentent par ailleurs une mauvaise stabilité dimensionnelle à chaud en raison de la basse température de tansition vitreuse de ce polyester (voisine de 40°C). Il en résulte qu'également les autres propriétés mécaniques, en particulier le module et la résistance en flexion, laissent à désirer aux températures élevées. Les matières à mouler en polytéréphtalate d'éthylèneglycol donnent par contre des articles ayant un ensemble de propriétés mécaniques satisfaisant car leur Tg se trouve au voisinage de 75°C.

On sait que les divers défauts mentionnés ci-avant, inhérents aux structures de polytéréphtalate d'éthylèneglycol ou de polytéréphtalate de butanediol-1,4, peuvent être corrigés en tout ou partie en réalisant des mélanges de ces polymères. Par exemple, l'addition de polytéréphtalate de butanediol-1,4 dans du polytéréphtalate d'éthylèneglycol (présent en quantités majoritaires dans le mélange) va fournir une composition de polyesters améliorée susceptible d'être moulée en adoptant des durées de séjour dans le moule industriellement praticables (cf. notamment FR-A 2 243 978). Par exemple encore, l'addition de polytéréphtalate d'éthylèneglycol dans du polytéréphtalate de butanediol-2,4 (présent en quantités majoritaires dans le mélange) va fournir une composition de polyesters améliorée qui une fois moulée donnera des articles ayant une tenue en température satisfaisante (cf. également le document cité ci-dessus).

On sait encore que, lorsque deux polyesters de structures chimiques différentes sont combinés à l'état fondu pour réaliser un mélange, on doit s'attendre à ce que les polyesters subissent une réaction de transestérification par chauffage qui peut être décelée par l'apparition d'un copolymère, par un abaissement notable du point de fusion d'au moins un des constituants polyesters, ainsi que par une forte diminution de la vitesse de cristallisation. Les polyesters ainsi partiellement transestérifiés conduisent par moulage à des articles présentant des propriétés mécaniques moins intéressantes que celles des articles issus de polyesters non transestérifiés. Par conséquent, l'emploi de mélanges de polyesters dans lesquels il se développe une réaction de transestérification n'est pas particulièrement conseillé en particulier lorsqu'une longue durée de séjour dans le moule est considérée comme importante et lorsque l'obtention de bonnes propriétés mécaniques et leur maintien aux températures élevées sont jugés importants.

On a décrit dans la DE-A 2 749 261 des compositions à base de copolyesters aromatiques comprenant des composés organiques à base de phosphates. Mais l'effet des additifs de cette nature réside essentiellement dans l'inhibition d'une coloration indésirable due à la présence du polyester entièrement aromatique qui se développe lors de la préparation et de la transformation.

Poursuivant des travaux dans ce domaine de la technique, la demanderesse a maintenant trouvé qu'il est possible d'éviter, durant la préparation et la transformation de mélanges de polyesters aliphatiques toute réaction de transestérification à un degré appréciable entre les polyesters, en additionnant aux constituants polyesters au moins un composé à base de phosphore.

Plus précisément, la présente invention concerne des compositions destinées notamment au moulage comprenant un couple de polyesters thermoplastiques renfermant de 5% à 95% en poids d'un premier constituant consistant en du polytéréphtalate d'éthylèneglycol ou son copolyester contenant au moins 80% en mole de motifs de récurrence téréphtalate d'éthylène et 95% à 5% en poids d' second constituant consistant en du polytéréphtalate de butanediol-1,4 ou son copolyester contenant au moins 80% en mole de motifs de récurrence téréphtalate de butylène et en outre au moins un composé à base de phosphore appartenant essentiellement au groupe des acides ortho-phosphoriques estérifiés de formules (I), (II) et (III):

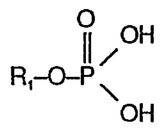

(I)

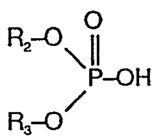

(II)

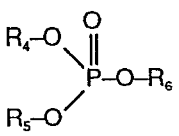

(III)

dans lesquelles:

- $R_1$, $R_2$ et $R_3$, identiques ou différents, représentent chacun: un radical alkyle, linéaire ou ramifié, ayant de 1 à 8 atomes de carbone; un radical phényle éventuellement substitué par 1 à 3 radicaux alkyles ayant de 1 à 3 atomes de carbone; un radical phénylalkyle comportant de 1 à 3 atomes de carbone dans le reste alkyle et dont le noyau benzénique peut éventuellement être substitué par 1 à 3 radicaux alkyles,
- $R_4$, $R_5$ et $R_6$, identiques ou différents, représentent chacun un radical alkyle, linéaire ou ramifié, ayant de 1 à 4 atomes de carbone qui peut être lui-même identique ou différent du radical alkyle éventuellement représenté par $R_1$, $R_2$ et $R_3$;

la quantité de composé(s) à base de phosphore mise en œuvre, exprimée en pourcentage en poids de phosphore élémentaire par rapport au poids du couple de polyesters, étant comprise entre 0,005% et 1%.

Parmi les composés à base de phosphore répondant aux formules (I), (II) et (III), on citera par exemple les espèces suivantes: les phosphates acides de mono-: méthyle, éthyle, propyle, butyle, tertiobutyle, pentyle, hexyle, phényle, crésyle, benzyle; les phosphates acides de di-: méthyle, éthyle, propyle, butyle, tertiobutyle, pentyle, hexyle, phényle, crésyle, benzyle; les phosphates acides de: méthyle éthyle, méthyle propyle, éthyle propyle, éthyle butyle, méthyle phényle, éthyle phényle; les phosphates de: triméthyle, triéthyle, tripropyle, tributyle, diméthyle éthyle, méthyle propyle, diméthyle butyle, diéthyle méthyle, diéthyle propyle.

On fait appel de préférence aux composés à base de phosphore de formules (I), (II) et (III) dans lesquelles les radicaux $R_1$ à $R_6$ représentent chacun un radical alkyle, linéaire ou ramifié, ayant de 1 à 6 atomes de carbone dans le cas des radicaux $R_1$ à $R_3$ et ayant de 1 à 3 atomes de carbone dans le cas des radicaux $R_4$ à $R_6$.

Il doit être bien entendu que l'on peut utiliser, outre un seul phosphate de formule (I), (II) ou (III):

- soit un mélange de deux ou de plus de deux phosphates de formule (I), (II) ou (III),
- soit un mélange d'un ou plusieurs phosphate(s) de formule (I) avec un ou plusieurs phosphate(s) de formule (II) ou avec un ou plusieurs phosphate(s) de formule (III).

Les proportions respectives de chaque phosphate dans leurs éventuels mélanges ne sont pas critiques et peuvent varier dans de larges limites.

On a écrit ci-avant que le composé à base de phosphore appartenait essentiellement au groupe des acides ortho-phosphoriques estérifiés de formules (I), (II) et (III). Par l'expression «essentiellement», on entend signifier que le (ou les) phosphate(s) mis en œuvre peuvent contenir éventuellement de faibles quantités d'autres composés du phosphore provenant de leur milieu de fabrication comme par exemple de l'acide orthophosphorique; dans cette éventualité, le (ou les) phosphate(s) de formules (I), (II) et (III) représentent généralement au moins 80% en mole par rapport à l'ensemble des composés du phosphore engagés.

Conformément à une modalité très préférentielle de mise en œuvre de la présente invention, on fait appel à un mélange de phosphates comprenant: un phosphate de monoalkyle (I) ayant de 1 à 3 atomes de carbone, le diester (II) correspondant et le triester (III) correspondant.

La quantité de composé(s) à base de phosphore mise en œuvre est comprise de préférence, entre 0,015% et 0,1%.

Comme comonomères préférés pour la formation des copolyesters de polytéréphtalate d'éthylèneglycol ou de polytéréphtalate de butanediol-1,4, on utilise des acides comme l'acide isophtalique, l'acide adipique, l'acide sébacique, l'acide trimésique, des diols comme l'éthylèneglycol (dans le cas du polytéréphtalate de butanediol-1,4), le butanediol-1,4 (dans le cas du polytéréphtalate d'éthylèneglycol), le propanediol-1,3, le cyclohexanediméthanol-1,4 et des triols comme le glycérol et le triméthylolpropane.

Suivant un mode de réalisation préférentiel, les couples du premier type comprennent 5% à 70% en poids et, de préférence, 10% à 50% du premier constituant et 95% à 30% en poids et, de préférence, 90% à 50% du second constituant.

Les polyesters thermoplastiques utilisés dans les couples du premier type présentent en général un indice de viscosité supérieur à 500 et, de préférence, compris entre 600 et 1300. L'indice de viscosité est mesuré à 25°C sur une solution à 1% en poids du polyester dans l'orthochlorophénol. L'indice de viscosité est égal à 1000 fois la viscosité réduite qui est elle-même égale au rapport de la viscosité spécifique sur la concentration.

Les polyesters du type polytéréphtalate d'éthylèneglycol, polytéréphtalate de butanediol-1,4 ou leurs copolyesters, constituants des compositions selon l'invention, sont préparés de préférence à partir d'un ester d'alkyle inférieur d'acide téréphtalique et en particulier du téréphtalate de diméthyle. On opère un interéchange d'ester entre cet ester et le diol, en présence éventuellement d'un autre comonomère, puis on soumet le

produit obtenu à une polycondensation. Les réactions d'interéchange et de polycondensation sont effectuées selon des procédés et en présence de catalyseurs en soi connus.

Les compositions qui entrent dans le cadre de la présente invention peuvent comprendre, à côté des polyesters thermoplastiques et du (ou des) composé(s) à base de phosphore, un agent nucléant et/ou un agent plastifiant et/ou au moins une charge de remplissage ou de renforcement et/ou un agent ignifugeant.

L'agent nucléant peut être l'un quelconque des composés connus à cet effet dans l'art antérieur. Il est choisi de préférence parmi les sels métalliques dérivés d'acide organophosphoniques, organophosphiniques et organophosphoneux. On se reportera au document FR-A 2 502 162 pour obtenir une description plus détaillée de ce type de matière. Les quantités d'agent nucléant sont comprises en général entre 0,05% et 10% en poids par rapport au couple de polyesters thermoplastiques.

L'agent plastifiant utilisable peut être l'un quelconque des composés connus à cet effet dans l'art antérieur. Il est choisi de préférence parmi les β-dicétones comportant de 14 à 43 atomes de carbone, les huiles végétales époxydées, les esters époxydés dérivés de l'acide oléique ou des acides gras du tallöl, les esters de l'acide EMPOL®. On se reportera là encore à la demande française précitée pour avoir plus de détail sur ce type de matière. Les quantités d'agent plastifiant sont comprises en général entre 1,5% et 15% en poids par rapport au couple de polyesters thermoplastiques.

Les charges de remplissage ou de renforcement qui peuvent être utilisées sont très diverses. Il peut s'agir d'une matière fibreuse comme: des fibres d'amiante; des fibres de carbone; des fibres de carbure ou de nitrure d'un métal ou d'un métalloïde telles que des fibres de carbure de silicium, de nitrure de silicium, de carbure de bore; des fibres organiques pouvant résister à la chaleur; et, de préférence, des fibres de verre. Ces fibres de verre peuvent être des fibres de verre ordinaire ou des fibres de verre ensimées par un produit polymérique et éventuellement traitées par exemple à l'aide de silane. Généralement, les fibres mises en œuvre présentent un diamètre se situant entre 3 et 30 µm et une longueur inférieure à 10 mm. La charge peut être constituée encore par notamment des microbilles de verre et des charges lamellaires comme des paillettes de mica, du talc. Les proportions de charge(s) peuvent atteindre 100% du poids du couple de polyesters themoplastiques; elles sont de préférence comprises entre 20% et 60%.

Les ignifugeants utilisables comprennent notamment le phosphore rouge et les composés organiques monomères halogénés tels que par exemple l'anhydride de l'acide tétrafluoro-phtalique ou tétrabromo-phtalique, l'oxyde de bis-(di-ou pentabromophényle), l'hexachlorobiphényle, le décabromobiphényle, le déchlorane (condensat d'une mole de cyclooctadiène avec 2 moles d'hexychlorocyclopentadiène), ces composés organiques halogénés étant éventuellement associés avec des composés à effet synergique comme l'anhydride antimonieux. Conviennent encore comme ignifugeant, des composés polymériques tels que notamment les polystyrènes bromés, les polycarbonates bromés. Les quantités d'agent ignifugeant sont comprises en général entre 5% et 25% en poids par rapport au couple de polyesters thermoplastiques.

D'autres additifs, tels que notamment des colorants et des agents de stabilisation contre l'action de la lumière, de l'oxygène et de la chaleur peuvent être aussi utilisés.

La préparation des compositions selon l'invention peut être réalisée de différentes manières. Les polyesters thermoplastiques, le (ou les) composé(s) à base de phosphore et éventuellement le (ou les) additif(s) prévu(s) peuvent être mélangés directement par passage de l'ensemble de ces ingrédients dans une extrudeuse à une ou plusieurs vis portée à une température de l'ordre de 200°C à 300°C. De manière préférable, on réalise le mélange des divers ingrédients en opérant d'abord à température ambiante (20°C) dans un mélangeur classique, puis en homogénéisant ensuite l'ensemble en opérant dans une extrudeuse à une ou plusieurs vis portée à la température précitée. A noter que le (ou les) composé(s) à base de phosphore peuvent être introduits dans les compositions de l'invention soit dans l'état physique où ils se trouvent naturellement, soit sous forme de solution dans un solvant approprié ayant de préférence un bas point de fusion. A l'issue de ces traitements, les compositions entrant dans le cadre de l'invention sortent du corps de l'extrudeuse sous forme de joncs qui sont ensuite découpés en granulés; ces granulés seront utilisés ultérieurement par exemple pour le formage des articles souhaités en opérant dans les appareils classiques de moulage par injection, par transfert ou par extrusion.

Ces compositions peuvent être moulées dans les conditions habituelles, c'est-à-dire à des températures matière comprises entre 200°C et 320°C et sous une pression de transfert de l'ordre de 1 M Pa à quelques centaines de M Pa. Les articles obtenus se démoulent sans problème et avec des cadences de moulage élevées. La durée du cycle de moulage peut être bien inférieure à 20 secondes.

Les couples de polyesters présents dans les compositions selon la présente invention s'avèrent ne pas subir de transestérification à un degré appréciable tant au cours de la préparation que lors d'un moulage ultérieur desdites compositions.

Une méthode commode pour savoir si les constituants polyesters ont gardé leur identité initiale au cours de la préparation des compositions de l'invention consiste à faire une analyse thermique différentielle (en abréviation ATD). Par exemple, dans le cas du couple polytéréphtalate d'éthylèneglycol + polytéréphtalate de butanediol-1,4, il s'est avéré que la composition obtenue

continue normalement à présenter deux points de fusion, l'un à environ 225°C pour le polytéréphtalate d'éthylèneglycol. La température exacte de chaque point de fusion varie avec les proportions respectives des polyesters. La stabilité de la composition a en outre été confirmée en observant que les températures d'au moins un des deux points de fusion restent constantes pendant au moins une heure à 280°C. Du fait de cette absence pratique de transestérification, non seulement les compositions de l'invention, une fois moulées, vont pouvoir présenter des propriétés mécaniques et thermiques améliorées par rapport aux mêmes compositions dans lesquelles la réaction de transestérification n'est pas bloquée, mais encore, comme les composants polyesters ne subissent pas de modification significative de leurs structures, il est maintenant possible de recycler dans une deuxième transformation les déchets de polymère issus d'une première transformation. De plus, on peut également obtenir les mêmes propriétés mécaniques et thermiques quel que soit le temps de séjour des compositions dans le fourreau d'une extrudeuse.

L'invention est illustrée plus en détail dans les exemples non limitatifs qui suivent.

Exemple 1

Dans un ensemble de grains de polycondensats constitué par 70% en poids de polytéréphtalate d'éthylèneglycol (indice de viscosité de 800) et 30% en poids de polytéréphtalate de butanediol-1,4 (indice de viscosité de 1200), on répartit un mélange de phosphate acide de monoéthyle (45% en mole), de phosphate acide de diéthyle (42% en mole) et de phosphate de triéthyle (13% en mole) utilisé en quantité déterminée de manière à apporter 0,09% de phosphore élémentaire par rapport au poids total des polyesters. Cette répartition est effectuée en solubilisant d'abord les composés à base de phosphore dans 1000 $cm^3$ d'acétone, puis en agitant les grains de polycondensats avec la solution obtenue en opérant dans un évaporateur rotatif. Le solvant utilisé est ensuite évaporé à faible température de l'ordre de 55 à 60°C.

Le matériau ainsi obtenu est introduit dans une extrudeuse monovis THORET ayant un diamètre de vis D de 20 mm et une longueur de 20 D et on procède à l'extrusion dans les conditions ci-après définies:

- température des zones de chauffage: alimentation: 270°C; zone de fusion: 280°C; zone de compression: 275°C; filière: 280°C,
- pression de sortie (contre-pression): 10 MPa,
- vitesse de rotation de vis: 55 tours/min,
- débit matière: 40 g/min.

En sortie de filière, le produit recueilli sous forme de jonc est refroidi par passage dans un bain d'eau froide, puis il est granulé et séché.

Sur la matière ainsi obtenue, on examine le niveau de transestérification par analyse thermique différentielle; plus précisément, on mesure la température de fusion (Tf) du polytéréphtalate d'éthylèneglycol présent dans la matière (Tf est la température au sommet du pic de fusion pour une vitesse d'échauffement de 10°C/min). Une transestérification même partielle va entraîner une diminution de Tf de façon très sensible. Une mesure de température est faite immédiatement aprè le stade de granulation/séchage et une seconde mesure est faite après une heure de traitement thermique à 280°C. Les résultats obtenus sont indiqués dans le tableau suivant.

A titre d'essai comparatif (essai A), on a reproduit les mêmes opérations que celles décrites ci-avant, mais sans utiliser cette fois un composé à base de phosphore. Les résultats des mesures de Tf sont indiqués dans le tableau suivant.

Exemple 2

On opère comme indiqué à l'exemple 1, mais en utilisant une quantité de composés à base de phosphore apportant 0,017% de phosphore élémentaire par rapport au poids total des polyesters. Les résultats des mesures de Tf sont indiqués dans le tableau suivant.

| Exemple/ Essai | Tf initiale | Tf après 1 h à 280° C | Transestérification |
|---|---|---|---|
| 1 | 257° C | 255° C | non |
| A | 257° C | 221° C | oui |
| 2 | 257° C | 256° C | non |

**Revendications**

1. Compositions destinées notamment au moulage comprenant un couple de polyesters thermoplastiques renfermant de 5% à 95% en poids d'un premier constituant consistant en du polytéréphtalate d'éthylèneglycol ou son copolyester contenant au moins 80% en mole de motifs de récurrence téréphtalate d'éthylène et 95% à 5% en poids d'un second constituant consistant en du polytéréphtalate de butanediol-1,4 ou son copolyester contenant au moins 80% en mole de motifs de récurrence téréphtalate de butylène et en outre au moins un composé à base de phosphore appartenant essentiellement au groupe des acides ortho-phosphoriques estérifiés de formules (I), (II) et (III):

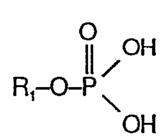

(I)

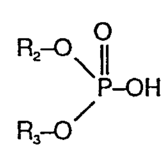

(II)

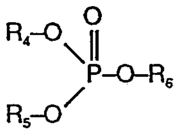

(III)

dans lesquelles:

- $R_1$, $R_2$ et $R_3$, identiques ou différents, représentent chacun: un radical alkyle, linéaire ou ramifié, ayant de 1 à 8 atomes de carbone; un radical phényle éventuellement substitué par 1 à 3 radicaux alkyles ayant de 1 à 3 atomes de carbone; un radical phénylalkyle comportant de 1 à 3 atomes de carbone dans le reste alkyle et dont le noyau benzénique peut éventuellement être substitué par 1 à 3 radicaux alkyles;
- $R_4$, $R_5$ et $R_6$, identiques ou différents, représentent chacun un radical alkyle, linéaire ou ramifié, ayant de 1 à 4 atomes de carbone, qui peut être lui-même identique ou différent du radical alkyle éventuellement représenté par $R_1$, $R_2$ et $R_3$;

la quantité de composé(s) à base de phosphore mise en œuvre, exprimée en pourcentage en poids de phosphore élémentaire par rapport au poids du couple de polyesters, étant comprise entre 0,005% et 1%.

2. Compositions selon la revendication 1, dans lesquelles la quantité de composé(s) à base de phosphore, exprimée en pourcentage en poids de phosphore élémentaire par rapport au poids du couple de polyesters, est comprise entre 0,015 et 0,1%.

3. Compositions selon l'une quelconque des revendications 1 et 2 comprenant en outre, à côté des polyesters thermoplastiques et du (ou des) composé(s) à base de phosphore, un agent nucléant et/ou un agent plastifiant et/ou au moins une charge de remplissage ou de renforcement et/ou un agent ignifugeant.

**Patentansprüche**

1. Besonders zum Verformen bestimmte Zusammensetzungen, umfassend ein Paar von thermoplastischen Polyestern, enthaltend 5 bis 95 Gew.% eines ersten Bestandteils, der aus Polyethylenglycolterephthalat oder seinem Copolyester besteht, enthaltend mindestens 80 Mol-% wiederkehrende Ethylenterephthalatgruppierungen und 95 bis 5 Gew.% eines zweiten Bestandteils, bestehend aus Poly-1,4-butandiolterephthalat oder seinem Copolyester, enthaltend mindestens 80 Mol-% wiederkehrende Butylenterephthalatgruppierungen und ausserdem mindestens eine Verbindung auf Basis von Phosphor, die im wesentlichen zu der Gruppe der veresterten Orthophosphorsäuren der Formeln (I), (II) und (III):

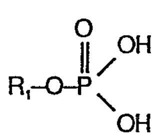

(I)

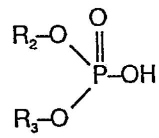

(II)

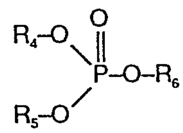

(III)

gehört, worin:

- $R_1$, $R_2$ und $R_3$, die identisch oder verschieden sind, jeweils bedeuten: einen geraden oder verzweigten Alkylrest mit 1 bis 8 Kohlenstoffatomen; einen Phenylrest, gegebenenfalls substituiert durch 1 bis 3 Alkylreste mit 1 bis 3 Kohlenstoffatomen; einen Phenylalkylrest mit 1 bis 3 Kohlenstoffatomen im Alkylrest, dessen Benzolring gegebenenfalls durch 1 bis 3 Alkylreste substituiert sein kann;
- $R_4$, $R_5$ und $R_6$, die identisch oder verschieden sind, jeweils bedeuten einen geraden oder verzweigten Alkylrest mit 1 bis 4 Kohlenstoffatomen, der seinerseits identisch oder verschieden von dem Alkylrest, gegebenenfalls dargestellt durch $R_1$, $R_2$ und $R_3$, sein kann;

wobei die eingesetzte Menge an Verbindung(en) auf Basis von Phosphor, ausgedrückt in Gew.%, elementarem Phosphor in bezug auf das Gewicht des Paars der Polyester zwischen 0,005% und 1% beträgt.

2. Zusammensetzungen gemäss Anspruch 1, worin die Menge an Verbindung(en) auf Basis von Phosphor, ausgedrückt in Gew.%, elementarem Phorphor in bezug auf das Gewicht des Paars der Polyester zwischen 0,015% und 0,1% beträgt.

3. Zusammensetzungen gemäss einem der Ansprüche 1 und 2, umfassend ausserdem neben den thermoplastischen Polyestern und der (oder den) Verbindung(en) auf Basis von Phosphor ein keimbildendes Mittel und/oder ein plastifizierendes Mittel und/oder wenigstens ein Füllkörper- oder Verstärkungsmaterial und/oder ein feuerfest machendes Mittel.

**Claims**

1. Compositions intended particularly for moulding, comprising a pair of thermoplastic polyesters containing from 5% to 95% by weight of a first constituent consisting of polyethylene terephthalate or its copolyester containing at least 80 mol% of ethylene terephthalate repeat units and 95% to 5% by weight of a second constituent consisting of poly-1,4-butylene terephthalate or its copolyester containing at least 80 mol% of butylene terephthalate repeat units and additionally at least one phosphorus-based compound belonging substantially to the group of esterified orthophosphoric acids of formulae (I), (II) and (III):

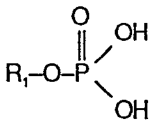

(I)

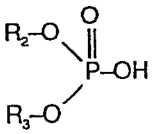

(II)

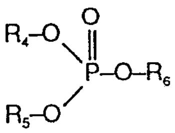

(III)

in which:
$R_1$, $R_2$ and $R_3$, identical or different, each denote: a straight-chain or branched alkyl radical, containing from 1 to 8 carbon atoms; a phenyl radical optionally substituted by 1 to 3 alkyl radicals containing from 1 to 3 carbon atoms; a phenylalkyl radical containing from 1 to 3 carbon atoms in the alkyl moiety and the benzene nucleus of which can optionally be substituted by 1 to 3 alkyl radicals;
- $R_4$, $R_5$ and $R_6$, identical or different, each denote a straight-chain or branched alkyl radical containing from 1 to 4 carbon atoms which can itself be identical with or different from the alkyl radical optionally denoted by $R_1$, $R_2$ and $R_3$;

the quantity of phosphorus-based compound(s) employed, expressed as a percentage by weight of elementary phosphorus relative to the weight of the polyester pair, being between 0.005% and 1%.

2. Compositions according to Claim 1, in which the quantity of phosphorus-based compound(s), expressed as a percentage by weight of elementary phosphorus relative to the weight of the polyester pair, is between 0.015 and 0.1%.

3. Compositions according to either of Claims 1 and 2, additionally comprising, beside the thermoplastic polyesters and the phosphorus-based compound(s), a nucleating agent and/or a plasticizer and/or at least one filler or reinforcing filler and/or a fireproofing agent.